# EUROPÄISCHE PATENTSCHRIFT

(11) **EP 0 574 755 B1**
(45) Veröffentlichungstag und Bekanntmachung des Hinweises auf die Patenterteilung: **29.12.1997**
(21) Anmeldenummer: 93108547.6
(22) Anmeldetag: 27.05.1993
(51) Int. Cl.: B22D 17/32, G01L 5/00

(54) **Vorrichtung zum Messen der Schliess- und Zuhaltekraft an Druckgiessmaschinen**
Device for measuring the clamping force and locking pressure in die-casting machines
Dispositif pour mesurer les forces de fermeture et de serrage dans des machines de moulage par pression

(30) Priorität: 17.06.1992 DE 4219762; 25.09.1992 DE 4232179
(43) Veröffentlichungstag der Anmeldung: 22.12.1993
(73) Patentinhaber: Maschinenfabrik Müller-Weingarten AG, D-88250 Weingarten (DE)
(72) Erfinder: Stummer, Friedrich, Dr.-Ing., W-7012 Fellbach (DE)
(74) Vertreter: Patentanwälte Eisele, Otten & Roth

(56) Entgegenhaltungen:
- EP-A- 0 024 518
- EP-A- 0 459 947
- AT-B- 356 831
- DE-A- 1 558 277
- DE-A- 3 020 181
- DE-A- 3 913 820

## Beschreibung

Die Erfindung betrifft ein Meß-, Überwachungs- und Regeleinrichtung nach dem Oberbegriff des Anspruchs 1.

Aus der Literaturstelle Ernst Brunnhuber "Praxis der Druckgußfertigung", 3. Auflage, 1980 ist auf den Seiten 28 ff. der prinzipielle Aufbau von Druckgießmaschinen bekannt. Demzufolge bestehen die Druckgießmaschinen im wesentlichen aus zwei Hauptbaugruppen, nämlich der Formschließ- und der Gießeinheit. Weitere Baugruppen sind die Auswerfeinheit, die Kernzugeinrichtung sowie der Maschinenantrieb einschließlich Steuerung.

Die Formschließeinheit dient zum Öffnen und Schließen der Druckgießform, d. h. zum Verschieben der einen beweglichen Formhälfte und zur Erzeugung der Zuhaltekraft während des Gießens. Dabei dient die feste Aufspannplatte zur Aufnahme der feststehenden Formhälfte und - bei Kaltkammermaschinen - zusätzlich zur Aufnahme der Gießgarnitur, bestehend aus Gießkammer und Gießkolben. Die bewegliche Aufspannplatte nimmt die bewegliche Formhälfte auf. Dabei ist die bewegliche Aufspannplatte an im allgemeinen vier Längssäulen oder Führungssäulen geführt, wobei die Führungssäulen zur Aufnahme der von der Formschließeinheit erzeugten Zuhaltekraft sowie zur Führung der beweglichen Aufspannplatte dienen.

Der Antrieb der Formschließeinheit kann durch einen hydraulischen Schließzylinder (rein kraftschlüssige Zuhaltung) oder durch ein bekanntes Doppelkniehebelsystem mit einem hydraulischen Schließzylinder als Antrieb als formschlüssige Zuhaltung erfolgen. Dabei muß die Zuhaltekraft derart bemessen sein, daß sie die beim Gießen auftretenden Gegenkräfte überwindet. Die Gießform wird demnach unter eine Vorspannung gesetzt, die die Gießkräfte überwindet. Dabei erfordern alle formschlüssigen Zuhaltesysteme eine äußerst exakte Einstellung der Formhöhe, d. h. der Bauhöhe der gesamten Druckgießform parallel zur Schließachse, damit die erforderliche Zuhaltekraft bei geschlossener Form erzeugt wird. Deshalb muß der gesamte Schließmechanismus längsverstellbar sein, was bei modernen Maschinen durch elektromotorisch angetriebene Formhöhenverstellung, die gleichmäßig auf alle vier Säulen einwirkt, erfolgt. Hierbei dienen z. B. hintere Säulenmuttern als Stellmuttern, die z. B. von einem Getriebemotor über Zahnräder betätigt werden.

Die bei einer Kniehebelanordnung erzeugte Zuhaltekraft hängt von der jeweiligen Strecklage des Kniehebels ab und darf keinesfalls die obere Totpunktlage überschreiten. Die erzielte Zuhaltekraft muß deshalb sehr genau bestimmt werden. Dies geschieht bei bekannten Druckgießmaschinen mittels bekannten Meß- und Überwachungssystemen, die die Zuhaltekraft bestimmen und kontrollieren. Dabei wird in der Praxis die Zuhaltekraft mittels der hierbei entstehenden Säulendehnung gemessen. Dies kann z. B. durch eine am Ende der Führungssäule eingebaute Meßuhr geschehen, die mit ihrem Taststift auf eine in die aufgebohrte Säule eingesetzte Stange drückt, wobei die Stange die Säulendehnung nicht mitmacht. Hierdurch kann der Dehnungsbetrag zwischen Säulenmutter und Stangebefestigung an der Meßuhr ermittelt werden. Diese Lösung hat den Nachteil, daß in den Säulen Langlochbohrungen erforderlich sind und daß elektrische Leitungen beim Säulenziehen oder Säulendemontieren an- und abgekuppelt werden müssen.

Eine weitere bekannte Möglichkeit zur Erfassung der Säulendehnung ist die Befestigung von Dehnmeßstreifen auf den Führungssäulen. Daneben gibt es auch elekronische Überwachungsgeräte, die die Säulendehnung oder bei Kniehebel-Schließeinheiten, den zum Strecken der Gelenke erforderlichen Hydraulikdruck im Schließzylinder erfassen.

Die Kraft auf die Säulen einer Druckgießmaschine im Dauerbetrieb kann auch durch mit entsprechenden Dehnmeßstreifen bestückte Ringe unter den Säulenmuttern erfaßt werden. Diese Lösung hat jedoch den Nachteil, daß sie konstruktiv sehr aufwendig und eine schwierig ein- und auszubauende Lösung darstellt.

Aus der EP-A-0 459 947 ist ein Holmkraft-Meßsystem insbesondere für Spritzgießmaschinen bekannt geworden, bei welchem zur Überwachung der Schließkraft während des Spritzvorganges die Zugkräfte der Holme laufend und zyklisch überwacht werden. Dazu werden zwischen den Traversen bzw. Flanschen und den Säulen-Zugmuttern spezielle Dünnscheiben-Kraftsensoren eingebaut, die anstelle von üblichen Unterlagsscheiben treten und nach dem piezoelektrischen Prinzip Kraftmeßsensoren darstellen.

Zur Auswertung der Säulenkraft sind auch Meß- und Überwachungssysteme bekanntgeworden, die die gemessenen Meßwerte mit Optimalwerten vergleichen. Im Falle einer nennenswerten Meßwertabweichung wird die Spannung in den Säulen durch eine automatische Korrektur der Formhöhenverstellung den Optimalwerten wieder angeglichen.

Dabei kann eine automatische Zuhaltekraftregulierung durch Messung des Schließdruck-Spitzenwertes beim Strecken eines Doppelkniehebelsystems der Schließeinheit erfolgen, wobei der Meßwert im Reguliergerät zur effektiven Zuhaltekraft in Beziehung gebracht, digital angezeigt und erforderlichenfalls automatisch durch eine Schrittverstellung korrigiert wird.

Alle bekannten Systeme zur Messung bzw. zur Überwachung der Zuhaltekraft einer Druckgießmaschine sind relativ kompliziert aufgebaut. Die Erfindung stellt sich deshalb die Aufgabe, eine vereinfachte Meß- und Überwachungseinrichtung vorzuschlagen, welches den heute üblichen Anforderungen genügt und mit welcher darüber hinaus der Anwendungsbereich vergrößert wird.

Diese Aufgabe ist ausgehend von einer Meß-, Überwachungs- und Regeleinrichtung nach dem Oberbegriff des Anspruchs 1 durch die kennzeichnenden Merkmale des Anspruchs 1 gelöst.

In den Unteransprüchen sind vorteilhafte und zweckmäßige Weiterbildungen der im Hauptanspruch angegebenen Einrichtung angegeben.

Die erfindungsgemäße Meß-, Überwachungs- und Regeleinrichtung hat gegenüber den bekannten Einrichtungen den Vorteil, daß sie sehr einfach und effektiv aufgebaut ist. Die erfindungsgemäße Einrichtung erlaubt es dann auch, daß Veränderungen z. B. bedingt durch Temperatureinfluß, durch entsprechende Regelimpulse korrigiert werden. Dabei beruht die Einrichtung auf einer Abkehr der unmittelbaren direkten Messung und Auswertung der Säulendehnung. Vielmehr werden Druckspannungen über einen Drucksensor erfaßt, die proportional zur Säulenkraft und damit zur Säulendehnung sind. Dabei wird der erforderliche Drucksensor erfindungsgemäß im Bereich der größten Druckspannungen auf die Gießmaschine angeordnet. Hohe Druckspannungen im Maschinengehäuse entstehen insbesondere im Bereich der für die Zuhaltekraft maßgeblichen Säulenmuttern.

Die Erfindung sieht darüber hinaus vor, daß zusätzlich zur Messung der Säulenkraft im Dauerbetrieb und damit zur Erfassung der Zuhaltekraft der Gießformen auch die Gießkraft selbst im Dauerbetrieb ermittelt und ausgewertet wird. Die Gießkraft kann dabei erfindungsgemäß dadurch ermittelt werden, daß die Zuhaltekraft vor dem Formfüllvorgang auf einen Festwert oder Nullwert gesetzt und der beim eigentlichen Gießprozeß auftretende Gießdruck in der Gießform als darüber hinausgehende Gießkraft erfaßt und ausgewertet wird.

Erfindungsgemäß wird eine entsprechende Meßeinrichtung im Bereich der hinteren, als Stellmuttern ausgebildeten Säulenmuttern angeordnet. Zusätzlich oder alternativ kann die Meßeinrichtung auch in die vordere, feste Aufspannplatte für die Gießform im Bereich der dort vorgesehenen Säulenmuttern vorgesehen sein.

Schließlich sieht die Erfindung vor, daß eine entsprechende Meßeinrichtung zur Erfassung der Gießkraft an der Gießaggregataufnahme und insbesondere an der dortigen Gießteiltraverse in der Nähe der Tragstangenmuttern angebracht ist.

Weitere Einzelheiten der Erfindung ergeben sich aus den Zeichnungen und anhand der nachfolgenden Beschreibung von Ausführungsbeispielen.

Es zeigen
- Fig. 1: eine schematische Darstellung einer Druckgießmaschine mit der erfindungsgemäßen Anordnung von Drucksensoren an den dort angegebenen Stellen,
- Fig. 2: eine nähere Darstellung der Einzelheit X aus Fig. 1 und 2,
- Fig. 3: eine nähere Darstellung der Einzelheit Y aus Fig. 1 und 2 und
- Fig. 4: eine nähere Darstellung der Einzelheit Z aus Fig. 1.

### Beschreibung:

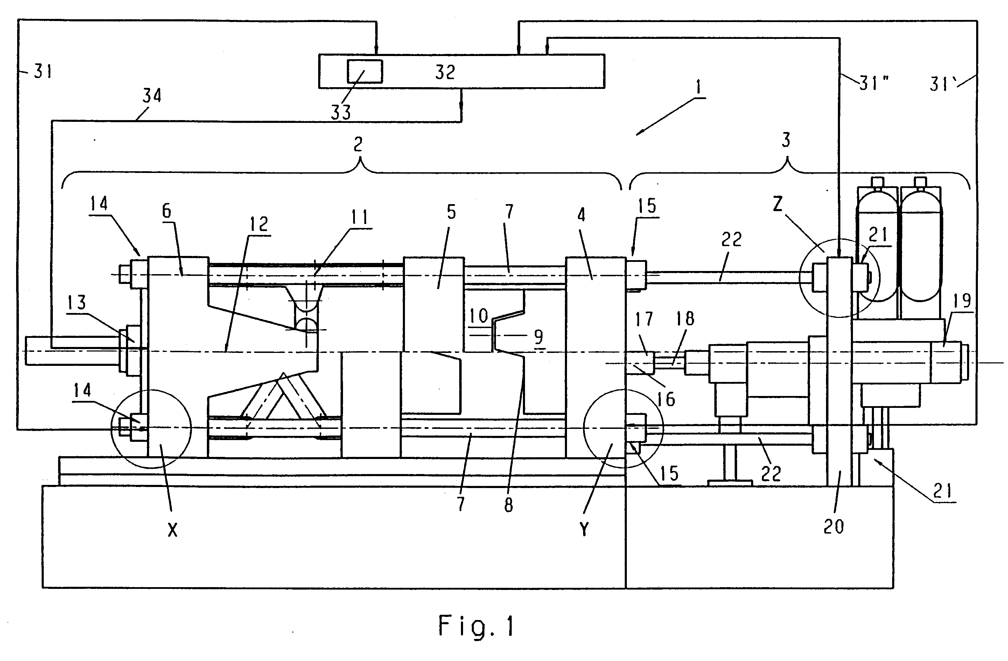

Die in der Fig. 1 schematisch dargestellte Druckgießmaschine 1 besteht aus den beiden Hauptbaugruppen, nämlich Formschließeinheit 2 und der Gießeinheit 3. Sie besteht aus der festen Aufspannplatte 4, der beweglichen Aufspannplatte 5 sowie der hinteren Traverse 6. Die bewegliche Aufspannplatte 5 ist über zwei obere und zwei untere Säulen 7 geführt, wobei die Säulen in der vorderen Aufspannplatte 4 und der hinteren Traverse 6 gelagert und mittels Schraubverbindungen befestigt sind.

Die aus zwei Hälften bestehende Druckgießform 8 ist mit ihrer feststehenden Formhälfte 9 an der festen Aufspannplatte 4 und mit ihrer beweglichen Formhälfte 10 an der beweglichen Aufspannplatte 5 befestigt. Die Formhälften 9, 10 werden mittels eines Doppelkniehebelsystems 11 gegeneinander verschoben und zusammengehalten, wobei die obere Hälfte in Fig. 1 die geschlossene, die untere Hälfte in Fig. 1 die geöffnete Stellung der Formhälften 9, 10 zeigt. Eine Kolbenstange 12 verschiebt das Kniehebelsystem mittels einer hydraulischen Kolbenzylindereinheit 13 in axialer Richtung. Zur Verstellung der Zuhaltekraft der Formhälften sind die hinteren Säulenmuttern 14 als Stellmuttern ausgebildet, die mittels eines nicht näher dargestellten Zahnkranzes in Verbindung mit einem Getriebemotor betätigt werden. Hierdurch ist eine elektromotorisch angetriebene Formhöhenverstellung möglich. Auf die hierzu eingangs erwähnte Literaturstelle Brunnhuber, Seite 35 wird verwiesen. Die vorderen Säulenmuttern 15 sind ortsfest an der vorderen festen Aufspannplatte angeordnet.

Die in Fig. 1 schematisch dargestellte Gießeinheit 3 besteht aus einer Gießkammer 16 mit darin verschiebbaren Gießkolben 17. Die Gießkolbenstange 18 wird von einer Gießkolbenantriebseinheit 19 betätigt. Die gesamte Gießeinheit bzw. das Gießaggregat ist an einer Gießteiltraverse 20 mittels einer Schraubverbindung 21 befestigt. Die Gießteiltraverse ist über Tragstangen 22 an der festen Aufspannplatte 4 befestigt. Die Gießeinheit 3 ist in Fig. 1 nicht gesondert dargestellt.

Die vorliegende Erfindung betrifft z. B. bei einer solchen Druckgießmaschine das Meß-, Überwachungs- und Regelsystem zur Erfassung und Beeinflussung der Zuhaltekraft auf die Druckgießform und damit der Kraft auf die Säule 7. Weiterhin betrifft die Erfindung eine Meßeinrichtung zur Messung und Auswertung der Gießkraft während des eigentlichen Gießvorgangs. Dies betrifft insbesondere die Krafterhöhung im Bereich der Schließeinheit sowie die alleinige Gießkraft im Bereich der Gießteiltraverse.

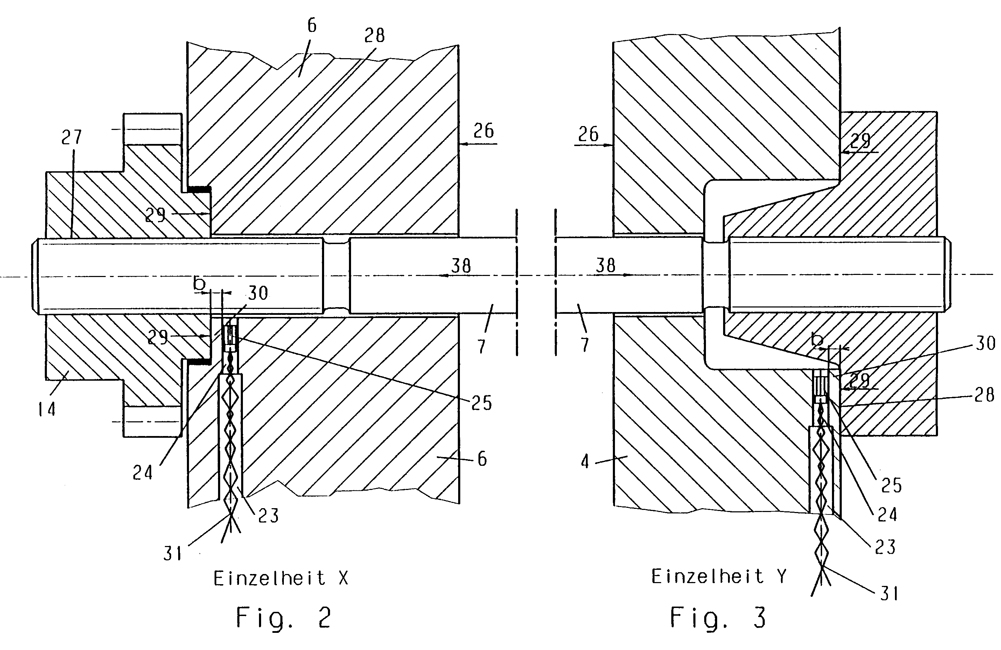

In der Fig. 2 ist die Einzelheit X, in der Fig. 3 die Einzelheit Y aus der Figur 1 in vergrößerter und prinzipieller Anordnung dargestellt. Dabei ist die Anordnung nur für die Säulenkraftmessung an einer Säule 7 gezeigt. Sie läßt sich selbstverständlich auf alle vier Säulen 7 analog übertragen.

Die weitere Beschreibung der Einzelheiten X, Y geschieht anhand der Figuren 2 und 3.

### Zur Einzelheit X:

In der Traverse 6 ist eine erste größere Bohrung 23 angebracht, die einen, in Fig. 3 dargestellten oberen Bohrungsbereich 24 aufweist, der sehr genau bearbeitet ist. In diesen genau bearbeiteten Bohrungsbereich 24 wird ein Meßdübel 25 eingesetzt. Der Meßdübel 25 wird genau an der Wandung der Bohrung 24 unter Vorspannung anliegend eingepaßt. Dabei wird am Meßdübel 25 mittels einer nicht dargestellten Spannzange eine Vorspannung erzeugt.

Die auf die Traverse 6 einwirkende Zuhaltekraft 26 wird auf die Säulenmutter 14 übertragen. Von der Säulenmutter oder Stellmutter 14 überträgt sich diese Kraft über das Gewinde 27 auf die Säule 7. Die auf die Auflagefläche 28 wirkende Druckkraft ist mit Bezugzeichen 29 eingetragen. Die Druckkraft 29 pflanzt sich als Druckspannung über das in seiner Breite b dünne Traversenmaterial 30 und wirkt auf die Paßbohrung 24 mit dem darin liegenden Meßdübel 25. Dabei kann der Meßdübel 25 bei dieser Einbauart in seiner radialen Richtung wirkende Meßwerte aufnehmen, d. h. der Einbau erfolgt quer zur Kraftrichtung.

Vom Meßdübel 25 aus wird das druckspannungsproportionale Signal über Meßleitungen 31 zu einer Meß- und Regeleinrichtung 32 weitergeleitet und mittels eines Rechners dort so aufbereitet, daß die Säulenkraft 38 z. B. in einem Display 33 ablesbar ist. Der Rechner 32 kann das Meßsignal auch für Regelungsaufgaben weiterverarbeiten und über eine Regel- bzw. Steuerleitung 34 dem Stellzylinder 13 oder der elektromotorisch angetriebenen Formhöhenverstellung zuführen. Diese Regelung kann bei Über- oder Unterschreitung eines Sollwertes erfolgen.

In Fig. 3 ist die Einzelheit Y aus Fig. 1 dargestellt. Danach kann die gleiche Einrichtung wie zur Einzelheit X in Fig. 2 beschrieben auch in der feststehenden Aufspannplatte 4 vorgesehen sein. In der vergrößerten Darstellung nach Fig. 3 sind gleiche Teile mit gleichen Bezugszeichen wie in Fig. 2 bezeichnet. Die in der Säule 7 zu messende Säulenkraft 38 wirkt wiederum über die feststehende Mutter als Druckkraft 29 auf die Anschlagfläche 28. Die Druckspannungen werden dann über den schmalen Steg 30 auf den Meßdübel 25, der sich in der Paßbohrung 24 befindet, übertragen. Über die Meßleitung 31' wird das Meßsignal an die Meß- und Regeleinrichtung 32 übertragen.

Wenn die Druckgießmaschine geschlossen ist und somit die Säulen gedehnt sind, kann die Säulenkraft gemessen werden. Hierzu ist eine relativ geringe Verstärkung in der Meßelektronik 32 erforderlich.

Wenn sich der Formhohlraum in der Druckgießform 8 füllt, bewirkt das Gießaggregat 3 eine weitere Kraft, die zu einer Erhöhung der in den Säulen 7 wirkenden Schließkraft führt, d. h. zu der durch das Doppelkniehebelsysem erzeugten Schließkraft addiert sich die Gießkraft. Hat man nach Schließen der Formhälften in der Meß- und Regeleinrichtung 32 durch einen sogenannten Reset die Säulenkraft als Nullwert eingeeicht, kann man beim Füllen der Gießform von diesem gesetzten Nullwert ausgehen und die eigentliche Gießkraft messen. Da die Gießkraft in der Regel weniger als ca. 1/10 der Summe der Säulenkraft beträgt, wird sinnvollerweise zum Messen der Gießkraft die Verstärkung der Meß- und Regeleinrichtung, d. h. die zugehörigen Elektronikgeräte entsprechend höher auf stärkere Empfindlichkeit geschaltet. Das so der Gießkraft proportionale Signal kann entweder zur Anzeige als Einzelwert im Display 33 oder in entsprechend auszudruckenden oder angezeigten Diagrammen dargestellt und verarbeitet werden. Das ermittelte Signal kann zu weiteren Regelungsaufgaben verwendet werden.

Die Ausführungsform nach Fig. 2 und 3 kann alternativ oder zu Kontrollzwecken selbstverständlich auch gemeinsam verwendet werden. Damit steht für jede Säule 7 eine doppelte Meßeinrichtung zur Verfügung.

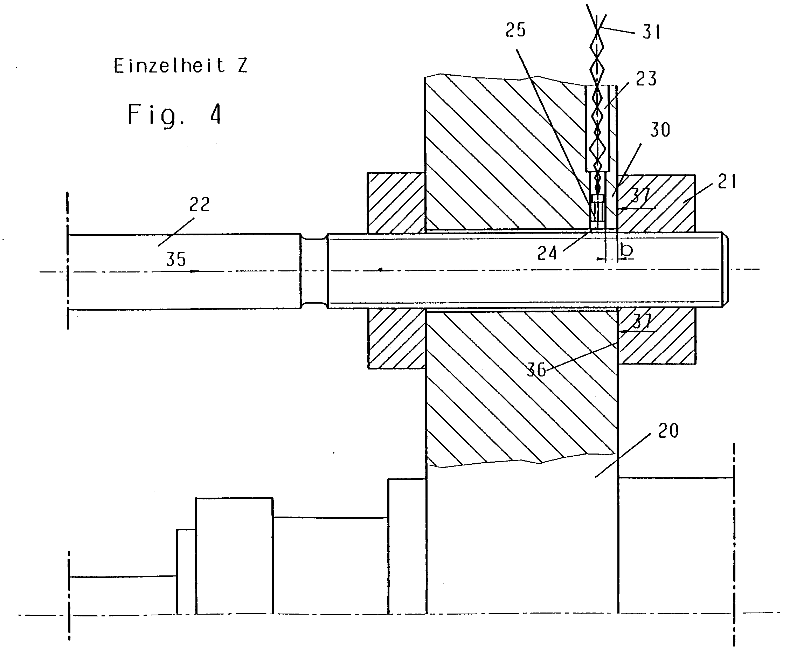

Bei dem in Fig. 4 dargestellten Ausführungsbeispiel wird das erfindungsgemäße Meßprinzip an der Gießaggregataufnahme, d. h. an der Gießteiltraverse 20 gemäß Einzelheit Z in Fig. 1 verwirklicht. In diesem Fall erfolgt eine Messung der Gießkraft, die sich durch Abstützung der Gießeinheit 3 über die Tragstangen 22 ergibt. Die Gießkolbenstange 18 drückt den Gießkolben 17 und damit das in der Gießkammer 16 befindliche flüssige Metall in die Gießform 8 und stützt sich gegen die Gießteiltraverse 20 ab. Die hierbei auftretenden Kräfte werden über die Gießteil-Tragstangen 22 auf die feste Aufspannplatte 4 übertragen.

Die in der Tragstange 22 entstehende Zugkraft 35 wird über die feststehende Mutter 21 auf die Anschlagfläche 36 der Tragstange 22 übertragen. Diese Andrückkraft ist mit Bezugszeichen 37 gekennzeichnet.

Ein Meßdübel 25 befindet sich wiederum in einer Paßbohrung 24. Über die Bohrung 23 werden die Meßleitungen 31'' aus der Meßbohrung herausgeführt. Die Kraft 37 überträgt Druckspannungen über den Spalt 30 auf den Meßdübel 25.

Der Meßdübel ist demnach in allen Ausführungsvarianten gemäß Einzelheit X bis Z unterhalb der jeweiligen Säulenmutter oder Tragstangenmutter eingebracht. In der Ausführungsform nach Fig. 4 kann somit die Gießkraft isoliert von der Säulen-Zuhaltekraft ermittelt werden. Wenn das Gießaggregat eine Kraft aufbringt, wirkt sich diese auf die zwischen der festen Aufspannplatte 4 und der Gießteiltraverse 20 angebrachte Tragstange 22 aus. Unterhalb der Tragstangenmutter 21 entsteht demnach die Druckkraft 37, die sich als Druckspannung auf den Meßdübel 25 auswirkt.

Für die vorliegende Erfindung sind Meßdübel als Drucksensoren erforderlich. Hierfür kann beispielsweise ein von der Firma Kistler vertriebener Meßdübel verwendet werden, der für die indirekte Kraftmessung in Maschinenteilen geeignet ist.

Die Erfindung ist nicht auf das beschriebene und dargestellte Ausführungsbeispiel beschränkt. Sie umfaßt auch vielmehr alle fachmännischen Weiterbildungen im Rahmen des erfindungsgemäßen Gedankens.

## Patentansprüche

1. Meß-, Überwachungs- und Regeleinrichtung zur Erfassung der Zuhaltekraft, der Säulenkraft und ggf. der Gießkraft bei einer Druckgießmaschine, mit einer festen (4) sowie einer beweglichen (5) Aufspannplatte und einer Traverse (6), und weiter mit einer Gießteiltraverse (20) und einer Tragstange (22) wobei die bewegliche Aufspannplatte (5) über Säulen (7) geführt ist, die ihrerseits in der Aufspannplatte (4, 5) und der Traverse (6) gelagert und mittels Säulenmuttern (14, 15) befestigt sind, mit einer Meßeinrichtung im Bereich der Säulenmutter (14, 15), wobei die Meßwerte erfaßt und einer Meßwerterfassung und Regeleinrichtung zugeführt und die Zuhalte-, Säulen- oder Gießkraft ggf. korrigiert wird, dadurch gekennzeichnet, daß im Bereich der die Säule (7) fixierenden Säulenmutter (14, 15) eine Meßbohrung (23, 24) in die Traverse (6) bzw. Aufspannplatte (4) zur Aufnahme eines Meßdübels (25) eingebracht ist, wobei der Meßdübel (25) die zur Säulenkraft proportionalen Druckspannungen erfaßt und einer Meß- und Regeleinrichtung (32) zuführt.

2. Einrichtung nach Anspruch 1, dadurch gekennzeichnet, daß die Meßeinrichtung mit Meßdübel (25) an der hinteren Traverse (6) und/oder an der festen Aufspannplatte (4) und/oder an einer Gießteiltraverse (20) jeweils im Bereich der Säulenmuttern (14, 15, 21) angeordnet sind.

3. Einrichtung nach Anspruch 1 oder 2, dadurch gekennzeichnet, daß die auf die Säule (7) bzw. auf die Tragstange (22) einwirkende Zugkraft über die endseitigen Säulenmuttern (14, 15, 21) auf deren Anschlagfläche (28, 36) übertragbar ist und daß der Meßdübel (25) in einer quer zur Kraftrichtung verlaufenden Meßbohrung (23, 24) unter der zugehörigen Säulenmutter angeordnet ist und die übertragenden Druckspannungen als Meßwertsignale auswertet.

4. Einrichtung nach einem oder mehreren der vorhergehenden Ansprüche, dadurch gekennzeichnet, daß die im Formhohlraum beim Gießvorgang auftretende Gießkraft erfaßbar ist, wobei sich die Gießkraft aus der Differenz der erfaßten Gesamt-Säulenkraft in den Säulen der Formschließeinheit (2) abzüglich der Zuhaltekraft (Schließkraft) der Gießform, hervorgerufen durch das Doppelkniehebelsystem (11) ergibt.

5. Einrichtung nach einem oder mehreren der vorhergehenden Ansprüche, dadurch gekennzeichnet, daß sich die Gießkraft als Zusatzkraft nach einer Nullwerteinstellung der Zuhaltekraft der Gießform ergibt.

6. Einrichtung nach einem oder mehreren der vorhergehenden Ansprüche, dadurch gekennzeichnet, daß der Meßdübel (25) im Bereich der Säulenbefestigung an der feststehenden Traverse (4, 6, 20) angeordnet ist, wobei der Meßdübel (25) in einer Querbohrung dicht unterhalb der jeweiligen Säulenmutter in einer Paßbohrung angeordnet ist und in Querrichtung druckbeaufschlagt ist.

7. Einrichtung nach einem oder mehreren der vorhergehenden Ansprüche, dadurch gekennzeichnet, daß bei Abweichung der Meßwerte vom Sollwert die Regeleinrichtung (32) Regelimpulse an die Formhöhenverstellung übermittelt.

## Claims

1. A measuring, monitoring and controlling system for acquisition of the locking pressure, the column force and if applicable the pouring force in the case of a pressure die-casting machine, with a fixed (4) and also a movable (5) fixture plate and a cross-member (6) and furthermore with a casting part cross-member (20) and a carrier bar (22), the movable fixture plate (5) being guided by columns (7) which are in turn mounted in the fixture plate (4, 5) and the cross-member(6) and being fixed by column nuts (14, 15), with a measuring means in the region of the column nut (14, 15), the measured values being acquired and fed to a measured value acquisition and regulating means, the retaining, column or casting force possibly being corrected, characterised in that in the region of the column nut (14, 15) fixing the column (7) there is a measuring bore (23, 24) incorporated into the cross-member (6) or fixture plate (4) to receive a measuring plug (25), the measuring plug (25) detecting the pressure stresses proportional to the column force and feeding them to a measuring and regulating means (32).

2. An arrangement according to Claim 1, characterised in that the measuring means with the measuring plug (25) are disposed on the rear cross-member (6) and/or on the fixed fixture plate (4) and/or on a cast cross-member (20), in each case in the region of the column nuts (14, 15, 21).

3. An arrangement according to Claim 1 or 2, characterised in that the tractive force acting on the column (7) or on the traction rod (22) can be transferred by the terminal column nuts (14, 15, 21) to their abutment surface (28, 36) and in that the measuring plug (25) is disposed in a measuring bore (23, 24) extending crosswise to the direction of force and under the associated column nut and evaluates the transmitting pressure stresses as measured value signals.

4. An arrangement according to one or more of the preceding Claims, characterised in that the casting force occurring in the moulding cavity during the casting process can be detected, the casting force being calculated from the difference between the detected total column force in the columns of the mould-closing unit (2) less the locking pressure (closing force) of the casting mould occasioned by the double toggle lever system (11).

5. An arrangement according to one or more of the preceding Claims, characterised in that the casting force occurs as an additional force after a zero value setting of the casting mould locking pressure.

6. An arrangement according to one or more of the preceding Claims, characterised in that the measuring plug (25) is disposed in the region of the column fixing on the fixed cross-member (4, 6, 20), the measuring plug (25) being disposed in a transverse bore just beneath the respective column nut in a fitting bore and being subjected to pressure in the transverse direction.

7. An arrangement according to one or more of the preceding Claims, characterised in that in the event of the measure values diverging from the desired value the control means (32) transmits control pulses to the mould height adjustment.

## Revendications

1. Dispositif de mesure, de surveillance, et de réglage pour déterminer la force de serrage, la force des colonnes et, le cas échéant, la force de coulée dans une machine de coulée sous pression, comportant une plaque de serrage fixe (4) ainsi qu'une plaque de serrage mobile (5) et une traverse (6) et, encore, une traverse partielle de coulée (20) et une barre de support (22), la plaque de serrage mobile (5) étant guidée sur des colonnes (7) qui, à leur tour, sont montées dans la plaque de serrage (4,5) et la traverse (6) et sont fixées au moyen d'écrous de colonne (14,15), comportant un dispositif de mesure dans la zone des écrous de colonne (14,15), les valeurs de mesure étant détectées et amenées à un dispositif de détection des valeurs de mesure et à un dispositif de réglage et les forces de serrage, des colonnes ou de coulée étant, le cas échéant, corrigées,
caractérisé en ce que, dans la zone des écrous (14,15) fixant les colonnes (7), il est prévu un perçage de mesure (23,24) dans la traverse (6) ou la plaque de serrage (4) pour recevoir une cheville de mesure (25), la cheville de mesure (25) détectant les contraintes de compression proportionnelles à la force des colonnes et les amenant à un dispositif de mesure et de réglage (32).

2. Dispositif selon la revendication 1,
caractérisé en ce que le dispositif de mesure avec la cheville de mesure (25) est agencé sur la traverse arrière (6) et/ou sur la plaque de serrage fixe (4) et/ou sur une traverse partielle de coulée (20), à chaque fois dans la zone des écrous de colonne (14,15,21).

3. Dispositif selon la revendication 1 ou 2,
caractérisé en ce que la force de traction agissant sur les colonnes (7) ou sur la barre de support (22) peut être transmise, par l'intermédiaire des écrous d'extrémité de colonne (14,15,21), sur la surface de butée (28,36), et en ce que la cheville de mesure (25) est agencée dans un perçage de mesure (23,24) s'étendant transversalement à la direction des forces sous l'écrou de colonne correspondant et exploite les contraintes de compression transmises comme signaux de valeurs de mesure.

4. Dispositif selon une ou plusieurs des revendications précédentes,
caractérisé en ce que la force de coulée apparaissant dans la cavité de moule lors du processus de coulée peut être détectée, la force de coulée résultant de la différence de la force totale des colonnes détectée dans les colonnes de l'unité de fermeture de moule (2) après déduction de la force de serrage (force de fermeture) du moule de coulée, provoquée par le système de levier coudé double (11).

5. Dispositif selon une ou plusieurs des revendications précédentes,
caractérisé en ce que la force de coulée est obtenue comme force supplémentaire après un réglage de valeur nulle de la force de serrage du moule de coulée.

6. Dispositif selon une ou plusieurs des revendications précédentes,
caractérisé en ce que la cheville de mesure (25) est agencée dans la zone de la fixation des colonnes sur la traverse fixe (4,6,20), la cheville de mesure (25) étant agencée dans un perçage transversal de façon étanche au-dessous de l'écrou de colonne respectif dans un perçage ajusté et pouvant être alimentée en pression en direction transversale.

7. Dispositif selon une ou plusieurs des revendications précédentes,
caractérisé en ce que, lorsque les valeurs de mesure s'écartent de la valeur de consigne, le dispositif de réglage (32) transmet des impulsions de réglage aux moyens de réglage de la hauteur du moule.
